# FASCICULE DE BREVET EUROPEEN

(11) **EP 2 208 143 B1**
(45) Date de publication et mention de la délivrance du brevet: **08.06.2011**
(21) Numéro de dépôt: 08842837.0
(22) Date de dépôt: 17.10.2008
(51) Int. Cl.: G06F 13/40, H04Q 3/52

(54) **STRUCTURE ET PROCEDE DE SAUVEGARDE ET DE RESTITUTION DE DONNEES**
STRUKTUR UND VERFAHREN FÜR SPEICHERUNG UND ABRUF VON DATEN
STRUCTURE AND METHOD FOR SAVING AND RETRIEVING DATA

(30) Priorité: 23.10.2007 FR 0707412
(43) Date de publication de la demande: 21.07.2010
(73) Titulaire: Commissariat à l'Énergie Atomique et aux Énergies Alternatives, 75015 Paris (FR)
(72) Inventeur: BLANC, Frédéric, F-91440 Bures sur Yvette (FR); DAVID, Raphaël, F-91440 Bures sur Yvette (FR)
(74) Mandataire: Lucas, Laurent Jacques
(86) Numéro de dépôt international: PCT/EP2008/064077
(87) Numéro de publication internationale: WO 2009/053318

(56) Documents cités:
- WO-A-02/071248
- US-A- 5 844 422
- US-B1- 6 507 211
- ENZLER R ET AL: "Co-simulation of a hybrid multi-context architecture" INTERNATIONAL CONFERENCE ON ENGINEERING OF RECONFIGURABLE SYSTEMS AND ALGORITHMS, XX, XX, 1 juin 2003 (2003-06-01), pages 174-180, XP002349309

## Description

La présente invention concerne une structure et un procédé de sauvegarde et de restitution de données permettant une gestion d'un espace mémoire. La présente invention est notamment adaptée à un système de calcul embarqué comportant un composant, associant une structure de calcul et un espace mémoire réalisés par exemple sur une même carte électronique.

La présente invention s'applique notamment aux besoins d'échange de données dans des applications à flux de données implémentées sur des structures de traitement multi-tâches programmables ou re-configurables dynamiquement. De telles structures de traitement peuvent être par exemple des processeurs, des circuits logiques programmables. Les applications à flux de données sont notamment utilisées dans des systèmes embarqués ayant de fortes contraintes en matière d'intégration et de coût de fabrication. Les applications à flux de données peuvent être mises en oeuvre par des structures de traitement multi-tâches intégrées dans des systèmes ayant des besoins de sauvegarde et de restitution des données. De tels systèmes, ayant des besoins de sauvegarde et de restitution des données, peuvent être : des équipements de télécommunication, des équipements de traitement d'images, des équipements de compression et décompression de données, des équipements de cryptage et de décryptage de données, des équipements de réseaux informatiques, des systèmes de configuration de circuits électroniques pour des architectures re-configurables, des équipements de mesures, des équipements d'acquisitions, des équipements de visualisation.

Les traitements mis en oeuvre par une application à flux de données sont une succession de tâches élémentaires modifiant un ou plusieurs flux de données d'entrée afin de produire un, ou plusieurs flux de données de sortie. Chaque tâche élémentaire consomme les données d'entrée pour les modifier et produire de nouvelles informations : les données de sortie. Une application à flux de données suit un modèle de type producteur-consommateur. L'ordre d'exécution des tâches élémentaires est notamment déterminé par des dépendances de données pouvant exister entre les données consommées par les tâches et les données produites par d'autres tâches. Le volume de données échangées entre les différentes tâches peut varier en fonction des tâches élémentaires mises en jeu par l'application : le rapport entre le volume des données produites et le volume des données consommées n'est pas nécessairement constant.

Dans le cas d'une absence de dépendance entre plusieurs tâches élémentaires, celles-ci peuvent être exécutées en concurrence sur une même ressource de calcul du système ou en parallèle sur deux ressources de calcul du système distinctes.

Si les traitements de l'application doivent être interrompus, il est nécessaire de sauvegarder les flux de données sortant des différentes tâches déjà accomplies afin de pouvoir reprendre les traitements de l'application plus tard. La reprise des traitements de l'application nécessite une restitution des flux de données d'entrée aux tâches consommatrices. Un cas particulier de ce type de mécanisme se retrouve dans des architectures reconfigurables, utilisables dans des systèmes embarqués. Une architecture reconfigurable est une structure matérielle dont les ressources peuvent être adaptées afin de réaliser un traitement désiré. Une telle architecture permet, en cours de traitement une reconfiguration d'une partie ou de l'ensemble de son architecture interne afin de réaliser l'application ou une sous-partie d'une application complète. Ainsi plusieurs reconfigurations peuvent être nécessaires afin de réaliser l'ensemble de l'application. Cette utilisation d'un circuit reconfigurable est qualifiée de dynamique. Une difficulté de mise en oeuvre de la reconfiguration dynamique est la récupération de données d'exécution d'une configuration correspondant à une sous-partie des traitements de l'application pour les transférer vers une sous-partie suivante, ceci afin que les reconfigurations n'influent pas sur l'application totale. Les données nécessaires lors d'un passage d'une sous-partie vers une autre sous-partie sont regroupées dans une entité appelée contexte. Chaque contexte peut être transmis sous la forme de flux de données à une mémoire. Les données contenues dans chaque contexte peuvent être hétérogènes, c'est à dire variables en nombre, en taille et en fréquence de transmission. Les contextes sont produits lors de l'exécution d'une sous-partie de l'application. Les données de contexte sont donc dynamiques et non déterminées avant l'exécution de la sous-partie de l'application.

La mise en oeuvre d'une architecture dynamique re-configurable performante, notamment en terme de rapidité de traitement, nécessite donc des systèmes de gestion de flux de données capables de gérer une hétérogénéité des flux de données notamment pendant une sauvegarde et une restitution de ces données dans le cadre d'un changement de contexte.

Des dispositifs de gestion de flux de données à sauvegarder et à restituer existent pour plusieurs types d'architectures de systèmes dont notamment :
■ des architectures de type circuit logique programmable, ou FPGA acronyme pour l'expression anglo-saxonne Field Programmable Gate Array signifiant réseau de portes programmables in situ ;
■ des architectures de type data-flow, expression anglo-saxonne signifiant flot de données ;
■ des architectures de type stream processor, expression anglo-saxonne signifiant processeur à flux.

Dans le cas des circuits logiques programmables, l'échange de données se fait par l'intermédiaire d'une mémoire principale. Des zones mémoires sont allouées dynamiquement dans la mémoire principale pour créer des zones d'échange entre producteur et consommateur. Cette solution est très flexible mais ne permet pas de supporter le parallélisme de traitement de tâches. Elle est, par ailleurs, très consommatrice en terme de surface de silicium et d'énergie.

Les architectures de type data-flow sont, en général, des solutions dédiées à un domaine applicatif dans lequel les flux à traiter sont bien maîtrisés et ne nécessitent pas de réorganisation complexe. Dans de tels systèmes, la gestion de flux se fait en utilisant des mémoires dédiées de type FIFO, acronyme pour l'expression anglo-saxonne First In First Out signifiant premier entré, premier sorti. Dans ce type d'architecture, toutes les tâches sont prévues à l'avance et pour chaque communication de données entre les différentes tâches, un espace mémoire spécifique est prévu et alloué. Il n'est donc pas nécessaire de partager les ressources mémoires entre les différentes tâches. Dans le cadre d'une gestion de la reconfiguration dynamique de l'architecture, une solution de type data-flow est mal adaptée car elle nécessite de dimensionner au pire cas l'ensemble des flux de données pouvant être nécessaires et donc l'ensemble des espaces mémoire. En effet, en cas de sous-dimensionnement, la structure de gestion de flux impose des contraintes fortes lors du portage d'application. Un surdimensionnement entraîne à l'inverse une surconsommation en énergie et une perte d'efficacité du système.

L'utilisation de mécanismes plus complexes utilisés pour les stream-processors permet de mieux dimensionner la structure de gestion de flux de données. En effet, des architectures de type stream-processors sont beaucoup plus généralistes et supportent des applications dans lesquelles les flux de données sont moins maîtrisables et nécessitent des opérations de réorganisation complexes. Ainsi les dispositifs développés à l'aide d'architectures de type stream-processors sont beaucoup plus complexes. La gestion de flux dans les architectures de type stream-processors est implémentée à base de mémoires. La gestion des adresses mémoire, qui permet de réorganiser les flux de données, est à l'origine d'un coût élevé dû notamment à la quantité de silicium nécessaire à la réalisation d'un tel système. De plus, ces architectures de type stream-processor intègrent des fonctionnalités de réorganisation de flux non exploitées et pénalisantes pour la consommation et l'efficacité dans des applications comportant des flux de données plus réguliers.

Le brevet US5844422 décrit notamment une structure pour sauvegarder différents états mémoire sur un FPGA.

Un objectif de la présente invention est notamment de dimensionner efficacement une structure de gestion des flux de données tout en maîtrisant la complexité de la structure de gestion des flux de données. A cet effet, l'invention a pour objet une structure et un procédé de sauvegarde et de restitution de données gérant des flux de données dans un espace mémoire partagé sans réorganisation des données.

La structure de sauvegarde et de restitution d'un flux de données comporte notamment une matrice de connecteurs répartis en ligne et en colonne sur la matrice. Chaque connecteur C d'une même ligne est notamment relié à ses deux connecteurs voisins sur la ligne s'ils existent. Chaque connecteur d'une même colonne est notamment relié à ses deux connecteurs voisins sur la colonne s'ils existent. Chaque ligne de connecteurs est notamment connectée à une mémoire. La mémoire a par exemple un fonctionnement de type premier entré, premier sorti. La mémoire peut fournir des informations sur son état aux connecteurs de la ligne, par l'intermédiaire d'un connecteur, situé à une extrémité de la ligne. Chaque colonne de connecteurs est notamment connectée à un port d'entrée et de sortie d'un flux de données de la structure par l'intermédiaire d'un connecteur par exemple situé à une extrémité de la colonne. Chaque connecteur est notamment apte à router et propager de manière autonome un flux de données entrant ou sortant de la structure, en fonction des états fournis par les mémoires.

Une sauvegarde d'un flux de données peut s'effectuer d'un port d'entrée et de sortie vers une ou plusieurs mémoires. Le flux de données passe notamment par des connecteurs de la matrice.

Une restitution d'un flux de données peut s'effectuer des mémoires vers un port d'entrée et de sortie, le flux de données passant par des connecteurs de la matrice.

Chaque connecteur peut router ou propager un flux de données selon :
■ un état de la mémoire connectée sur la ligne du connecteur ;
■ un type d'opération mémoire: lecture, écriture.

Chaque connecteur comporte notamment quatre interfaces :
■ une première interface comportant :
   o une première entrée et, ou sortie de données de flux ;
   o une entrée d'un signal de commande de lecture ou d'écriture ;
■ une deuxième interface comportant :
   o une deuxième entrée et, ou sortie de données de flux ;
   o une sortie d'un signal de commande de lecture ou d'écriture ;
■ une troisième interface comportant :
   o une troisième entrée et, ou sortie de données de flux ;
   o une sortie d'une opération mémoire de lecture ou d'écriture ;
   o une entrée d'un état de la mémoire ;
■ une quatrième interface comportant :
   o une quatrième entrée et, ou sortie de données de flux ;
   o une entrée d'une opération mémoire de lecture ou d'écriture ;
   o une sortie d'un état de la mémoire.

La première interface d'un premier connecteur situé à une extrémité de l'une des colonnes est par exemple connectée à un port d'entrée et, ou de sortie de la structure.

La troisième interface d'un deuxième connecteur situé à une extrémité de l'une des lignes est par exemple connectée à une mémoire de la structure.

Les premières et deuxième interfaces de connecteurs consécutifs sur une même colonne, sont par exemple connectées entre elles.

Les troisième et quatrième interfaces de connecteurs consécutifs sur une même ligne sont par exemple connectées entre elles.

Une mémoire peut avoir trois états : vide, pleine et non vide.

Le procédé de sauvegarde et de restitution d'un flux de données, utilise notamment la structure de sauvegarde et de restitution.

La sauvegarde d'un flux de données peut comporter les étapes suivantes :
■ réception d'un signal de commande d'écriture et des données de flux à sauvegarder sur un premier port de la structure ;
■ propagation du signal de commande d'écriture et des données de flux dans la matrice ;
■ arrivée du signal de commande d'écriture et des données dans un connecteur courant;

Si la mémoire de la ligne du connecteur courant est vide :
■ envoi par le connecteur courant d'un signal de contrôle de d'écriture à la mémoire de la ligne du connecteur courant et marquage du connecteur courant ;
■ écriture des données de flux dans la mémoire de la ligne du connecteur courant ;

Si la mémoire de la ligne du connecteur courant est non-vide :
■ passage des données de flux restant à sauvegarder au connecteur suivant dans la colonne du connecteur courant et reprise de la sauvegarde à l'étape d'arrivée du signal de commande d'écriture dans un connecteur courant, le connecteur suivant remplaçant le connecteur courant ;

La restitution d'un flux de données peut comporter les étapes suivantes :
■ réception d'un signal de commande de lecture d'un flux de données sur le premier port de la structure ;
■ propagation du signal de commande de lecture dans la matrice ;
■ arrivée du signal de commande de lecture dans un connecteur courant ;
Si le connecteur courant est marqué :
■ envoi par le connecteur courant d'un signal de contrôle de lecture à la mémoire de la ligne du connecteur courant ;
■ lecture des données de flux sauvegardées dans la mémoire de la ligne du connecteur courant et propagation des données de flux lues dans la matrice jusqu'au premier port ;
■ annulation du marquage du connecteur courant;
■ passage du signal de commande de lecture au connecteur suivant dans la colonne du connecteur courant et reprise du procédé à l'étape d'arrivée du signal de lecture dans un connecteur courant, le connecteur suivant devenant le connecteur courant ;
Si le connecteur est non marqué :
■ passage du signal de commande de lecture au connecteur suivant dans la colonne du connecteur et reprise du procédé à l'étape d'arrivée du signal de lecture dans un connecteur, le connecteur suivant devenant le connecteur courant.

Au cours de la sauvegarde un état de disponibilité de la mémoire de la ligne du connecteur courant peut être diffusé au connecteur courant à sa demande.

Les lectures des données d'un même flux sauvegardées dans des mémoires différentes sont par exemple effectuées de manière parallèle.

L'invention a notamment pour principal avantage de permettre une sauvegarde et une restitution de flux de données parallèles de manière indépendante. L'allocation des mémoires ainsi que la gestion des adresses est avantageusement automatique et ne nécessite pas d'intervention d'un concepteur ou d'un outil tiers.

D'autres caractéristiques et avantages de l'invention apparaîtront à l'aide de la description qui suit, donnée à titre illustratif et non limitatif, et faite en regard des dessins annexés qui représentent :
- la figure 1 : un exemple d'une application de flux de données de type réseau de processus de Kahn ;
- la figure 2 : un exemple d'une application de flux de données de type réseau de processus de Kahn à deux configurations ;
- la figure 3 : une représentation schématique d'une structure de sauvegarde et de restitution selon l'invention ;
- la figure 4 : une représentation schématique des interfaces d'un connecteur de la structure de sauvegarde et de restitution selon l'invention ;
- la figure 5 : une représentation schématique d'un connecteur dans un état non connecté ;
- la figure 6 : une représentation schématique d'un connecteur dans un état de flux de sauvegarde connecté ;
- la figure 7 : une représentation schématique d'un connecteur dans un état de flux de restitution connecté ;
- la figure 8 : différentes étapes possibles du procédé de sauvegarde selon l'invention ;

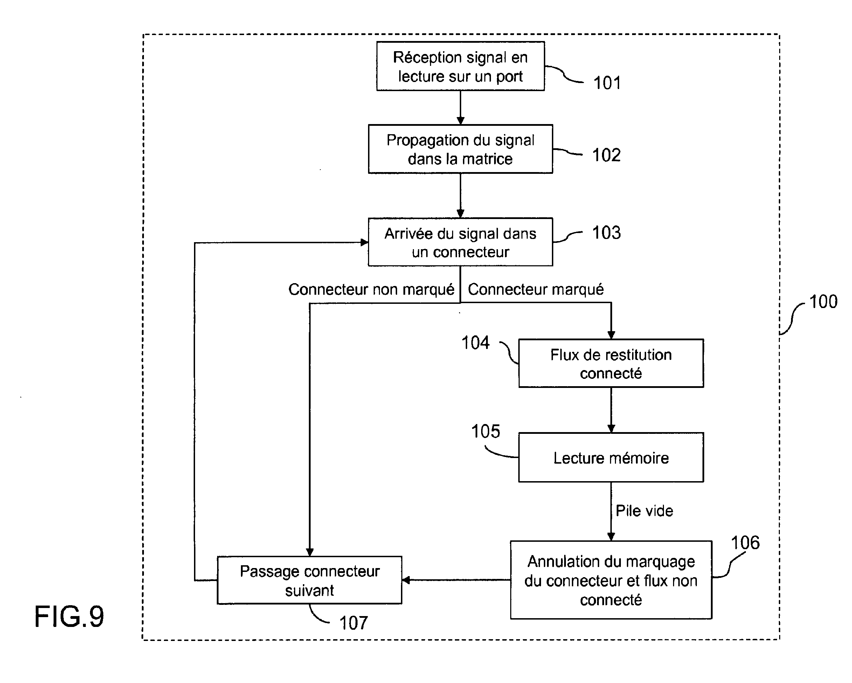

- la figure 9 : différentes étapes possibles du procédé de restitution selon l'invention.

Le passage de la première configuration 20 à la deuxième configuration 21, par exemple, nécessite une étape de sauvegarde et de restitution des contextes 22, 23. Le nombre et la taille des contextes 20, 21 peuvent être très variables. Afin d'obtenir une plate-forme à reconfiguration dynamique performante avec le moins de contrainte possible, il convient d'intégrer dans les systèmes des mécanismes permettant de gérer des flux de données ayant une forte hétérogénéité. La présente invention propose donc une solution qui, bien qu'elle soit applicable dans d'autres systèmes, prend tout son sens pour la gestion de la reconfiguration dynamique.

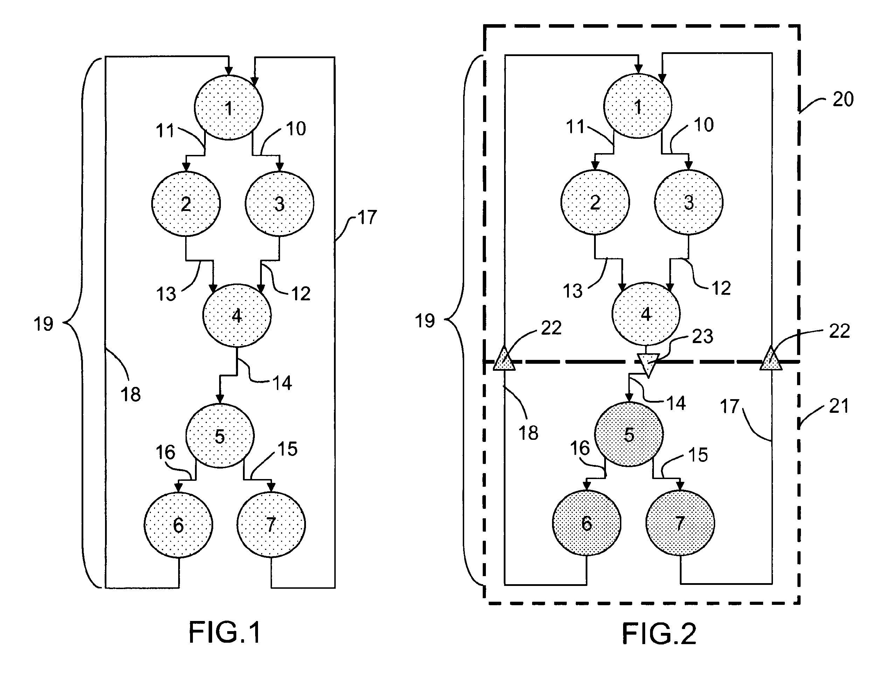

La figure 1 représente un exemple d'une application de flux de données.

Il existe un grand nombre de formalismes pour représenter une application de flux de données. Parmi ces formalismes on trouve les réseaux de processus de Khan, ou KPN. Un réseau de processus de Kahn 19 est composé d'un ensemble fini de processus 1, 2, 3, 4, 5, 6, 7, qui communiquent entre eux par des canaux FIFO acronyme pour l'expression anglo-saxonne First In First Out signifiant premier entré, premier sorti. Les canaux FIFO 10, 11, 12, 13, 14, 15, 16, 17, 18, disposent notamment d'une capacité de stockage infinie. La figure 1 représente exemple d'un réseau KPN comportant sept processus 1, 2, 3, 4, 5, 6, 7. Chaque processus 1, 2, 3, 4, 5, 6, 7 peut faire des lectures, qui sont bloquantes, et des écritures, non bloquantes, sur un canal spécifié. De plus, un réseau KPN 19 respecte notamment la règle suivante : un canal FIFO ne peut être connecté qu'à un seul processus en entrée et à un seul processus en sortie. Par exemple, sur la figure 1, un premier canal FIFO 11 est connecté à un premier processus 1 en entrée et à un deuxième processus 2 en sortie. De la même manière, un deuxième canal FIFO 10 est connecté au premier processus 1 en entrée et à un troisième processus 3 en sortie. Dans un réseau KPN 19 l'activité des tâches est uniquement dépendante des données disponibles. Dans le cadre d'un système réel, il est nécessaire de considérer des canaux FIFOs de taille limitée et d'ordonnancer les traitements. Si pour une raison quelconque le système réel doit être arrêté, les données présentes sur chaque canal FIFO utilisé doivent être sauvegardées afin de pouvoir reprendre par la suite le traitement. C'est bien sûr le cas pour une reconfiguration circuit du système : dans ce cas un contexte sera composé des canaux FIFO utilisés. Les processus KPN sont alors regroupés et ordonnancés de façon à obtenir des configurations correspondant à des sous-parties de l'application globale tel que représenté sur la figure 2.

La figure 2 représente un réseau KPN 19 à deux configurations 20, 21. Une première configuration 20 peut comporter : le premier processus 1, le deuxième processus 2, le troisième processus 3 et un quatrième processus 4. Une deuxième configuration 21 peut comporter : un cinquième processus 5, un sixième processus 6 et un septième processus 7. Les frontières entre les deux configurations 20, 21 permettent d'identifier les contextes à transmettre. Par exemple, la frontière 25 entre les deux configurations 20, 21 permet d'identifier un premier contexte 23 à transmettre composé d'un troisième canal FIFO 14 connecté au quatrième processus 4 en entrée, le quatrième processus 4 faisant partie de la première configuration 20, et au cinquième processus 5 en sortie, le cinquième processus 5 faisant partie de la deuxième configuration 21. De la même manière, on peut identifier un deuxième contexte 22 composé d'un cinquième canal FIFO 17 et d'un sixième canal FIFO 18. Le cinquième canal FIFO 17 est connecté au septième processus 7 en entrée, le septième processus 7 faisant partie de la deuxième configuration 21, et au premier processus 1 en sortie, le premier processus 1 faisant partie de la première configuration 20. Le sixième canal FIFO 18 est connecté au sixième processus 6 en entrée, le sixième processus 6 faisant partie de la deuxième configuration 21, et au premier processus 1 en sortie, le premier processus 1 faisant partie de la première configuration 20.

Les configurations 20, 21 peuvent avoir des natures très différentes en fonction des architectures de circuit auxquelles elles s'appliquent. Par exemple, un circuit reconfigurable peut être à gros grain comme dans des architectures XPP, acronyme de l'expression anglo-saxonne extreme processing platform signifiant plate-forme de calcul extrême, ou par exemple dans des architectures DART, qui sont des architectures re-configurables dynamiquement. Un circuit à gros grain comporte des éléments de calcul associés à une opération dite complexe comme une multiplication arithmétique. Le circuit peut également être un circuit à grain fin comme un FPGA. Un circuit à grain fin comporte des éléments de calcul associés à une opération logique de premier niveau comme une opération « ou », « et ».

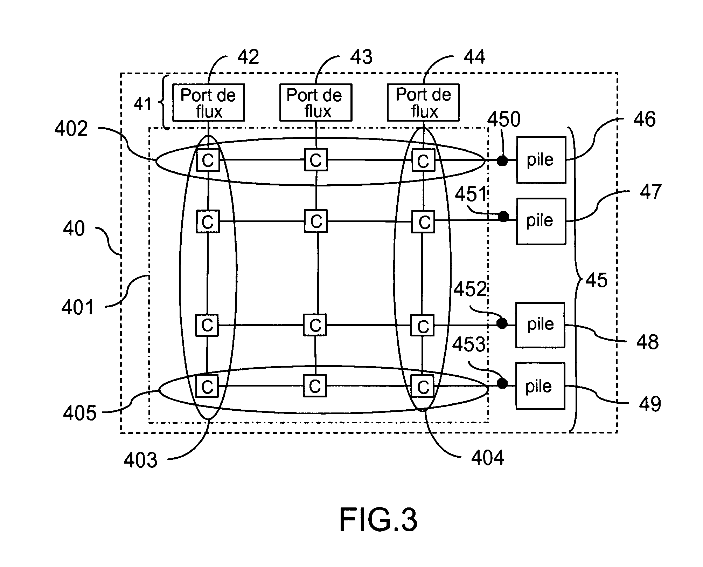

La figure 3 représente de manière schématique une structure de sauvegarde et de restitution de données 40 selon l'invention. La structure de sauvegarde et de restitution de données 40 fait partie d'un système gérant notamment une production et une consommation de flux de données afin de réaliser le traitement qui lui est assigné. La structure de sauvegarde et de restitution 40 permet une sauvegarde de données notamment dans un ensemble de bancs mémoire interne au système. Les données sauvegardées proviennent par exemple de composants de calcul du système. La structure de sauvegarde et de restitution 40 permet également une restitution des données sauvegardées, dans les bancs mémoire internes, à destination d'autres composants du système.

La structure de sauvegarde et de restitution 40 est notamment composée de trois types de ressources.

Un premier type de ressources est un premier vecteur 41 comportant un nombre entier n, supérieur à un, de port de flux 42, 43, 44. Sur la figure 3, trois ports de flux 42, 43, 44, sont représentés pour exemple. Un port de flux 42, 43, 44 comporte au moins une entrée/sortie de flux de données permettant la circulation de chaque donnée de flux ainsi que de signaux de contrôle. Les flux de données sont notamment reçus de la part d'autres composants du système et, ou, destinés à d'autres composants du système, externes à la structure de sauvegarde et de restitution 40. Les signaux de contrôles permettent de sélectionner une opération à réaliser par une mémoire de la structure de sauvegarde et de restitution 40 : soit une lecture pour une restitution de données, soit une écriture pour une sauvegarde de données.

Un deuxième type de ressources est un deuxième vecteur 45 d'un nombre p, entier supérieur à un, de mémoires 46, 47, 48, 49. Sur la figure 3, à titre d'exemple quatre mémoires 46, 47, 48, 49 sont représentées. Les quatre mémoires 46, 47, 48, 49 représentées sur la figure 3 peuvent être des piles. La notion de pile caractérise un fonctionnement de la mémoire qui peut être de manière préférentielle une mémoire de type FIFO. L'utilisation d'une mémoire de type FIFO est particulièrement pertinente dans la structure de sauvegarde et de restitution 40 selon l'invention. Les mémoires 46, 47, 48, 49 sont chacune connectée à un des ports d'entrée/sortie mémoire 450, 451, 452, 453. Un port d'entrée/sortie mémoire 450, 451, 452, 453 permet de véhiculer des données de flux, des informations sur l'état de la mémoire : vide,non vide ou pleine, ainsi que des signaux de contrôle des opérations mémoire permettant l'écriture de données en mémoire ou la lecture de données en mémoire. Une lecture de données en mémoire peut s'effectuer sur réception par la mémoire d'un signal de contrôle nommé tirer, par exemple. Une écriture de données en mémoire peut s'effectuer sur réception par la mémoire d'un signal de contrôle nommé pousser, par exemple.

Un troisième type de ressources est composé d'un réseau d'interconnexions 401 entre le premier vecteur de ports 41 et le deuxième vecteur de mémoires 45 par l'intermédiaire des ports d'entrée/sortie mémoire 450, 451, 452, 453. Le réseau d'interconnexions 401 peut être réalisé sous la forme d'une matrice 401 de connecteurs C. La taille de la matrice 401 de connecteurs C est déterminée par le nombre de ports de flux de données 42, 43, 44 et le nombre de mémoires de la structure 40. La matrice 401 de connecteurs C peut par exemple comporter nxp connecteurs C. Sur la figure 3, la matrice 401 représentée comporte à titre d'exemple douze connecteurs C.

L'organisation matricielle des connecteurs C permet d'associer chaque mémoire 46, 47, 48, 49 à une ligne chaînée de connecteurs C. Par exemple, une première ligne chaînée 402 peut être associée à une première mémoire 46, une deuxième ligne chaînée 405 peut être associée à une deuxième mémoire 49. L'organisation matricielle des connecteurs C permet également d'associer chaque port de flux 42, 43, 44 à une colonne chaînée de connecteur C. Par exemple, une première colonne chaînée 403 peut être associée à un premier port de flux 42, une deuxième colonne chaînée 404 peut être associée à un deuxième port de flux 44. Chaque connecteur C peut ainsi transmettre les informations de contrôle et les données de flux soit vers une autre ligne de connecteurs C soit vers une autre colonne de connecteurs C.

Les connecteurs C, utilisés dans la structure de sauvegarde et de restitution 40 selon l'invention, peuvent être des transistors réalisés au moyen de multiplexeurs par exemple.

Les piles 46, 47, 48, 49 peuvent comporter une mémoire ou bien plusieurs registres mémoire cascadés.

La structure matricielle de la structure de sauvegarde et de restitution 40 selon l'invention permet avantageusement des sauvegardes et des restitutions de flux de données de manière parallèle et concurrente.

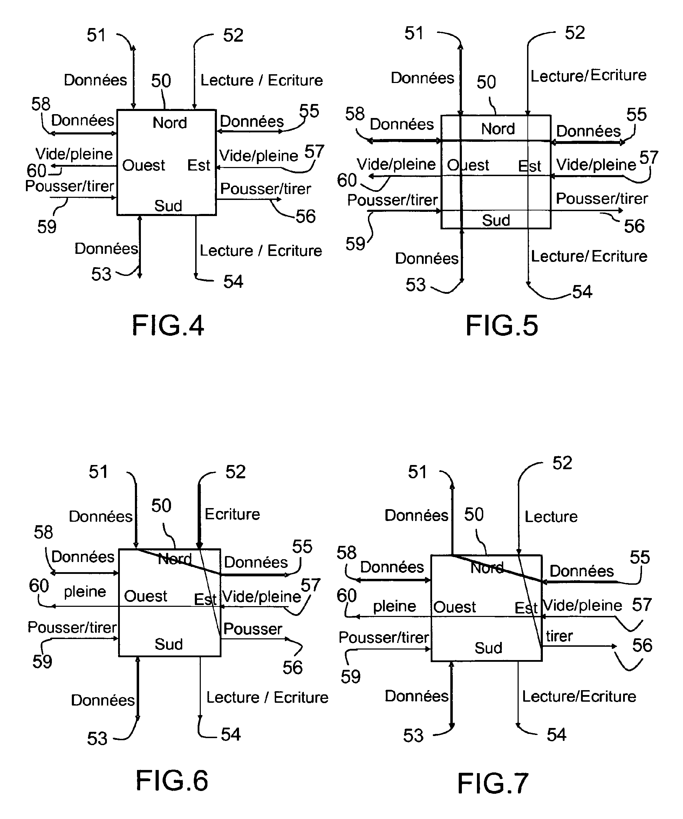

La figure 4 représente de manière schématique un exemple d'un connecteur 50 représentant chacun des connecteurs C de la matrice 401 représentée sur la figure 3. Le connecteur 50 comporte par exemple quatre interfaces nommées sur la figure 4 : Nord, Sud, Est, Ouest.

Les interfaces Est et Ouest du connecteur 50 permettent notamment de relier celui-ci avec deux connecteurs C adjacents au connecteur 50, s'ils existent, positionnés sur la même ligne que le connecteur 50 dans la matrice 401, de part et d'autre du connecteur 50.

Les interfaces Nord et Sud du connecteur 50 permettent notamment de relier celui-ci avec deux connecteurs C adjacents au connecteur 50, s'ils existent, positionnés sur la même colonne que le connecteur 50, de part et d'autre du connecteur 50.

L'interface Nord du connecteur 50 comporte notamment :
■ une première entrée/sortie de données de flux 51 ;
■ des entrées de commande 52 permettant de véhiculer des signaux de commande de type écriture ou lecture.

L'interface Sud du connecteur 50 comporte notamment :
■ une deuxième entrée/sortie de données de flux 53 ;
■ des sorties de commande 54 permettant de véhiculer des signaux de commande de type écriture ou lecture.

L'interface Est du connecteur 50 comporte notamment :
■ une troisième entrée/sortie de données de flux 55 ;
■ des sorties de signaux de contrôle d'opérations mémoire 56 véhiculant par exemple les informations pousser et tirer ;
■ une première entrée/sortie d'états 57, vide ou pleine, de la mémoire située sur la ligne du connecteur 50.

L'interface Ouest du connecteur 50 comporte notamment :
■ une quatrième entrée/sortie de données de flux 58 ;
■ des entrées de signaux de contrôle d'opérations mémoire 59 véhiculant par exemple les informations pousser et tirer ;
■ une deuxième entrée/sortie d'états 60, vide ou pleine, de la mémoire située sur la ligne du connecteur 50.

Les opérations mémoire pousser et tirer correspondent réciproquement à une opération d'écriture et à une opération de lecture dans la mémoire 46, 47, 48, 49. Les termes pousser et tirer sont notamment liés à l'utilisation d'une pile pour réaliser la mémoire 46, 47, 48, 49.

L'interface Est d'un premier connecteur C est reliée à l'interface Ouest d'un deuxième connecteur C adjacent au premier connecteur C, s'il existe, sur la même ligne de la matrice 401 que le premier connecteur C.

L'interface Ouest du premier connecteur C est reliée à l'interface Est d'un troisième connecteur C adjacent au premier connecteur C et symétrique au deuxième connecteur C par rapport au premier connecteur C, sur la même ligne de la matrice 401 que le premier connecteur C, s'il existe.

L'interface Nord du premier connecteur C est reliée à l'interface Sud d'un quatrième connecteur C adjacent au premier connecteur C, s'il existe, sur la même colonne de la matrice 401 que le premier connecteur C.

L'interface Sud du premier connecteur C est reliée à l'interface Nord d'un cinquième connecteur C adjacent au premier connecteur C et symétrique au quatrième connecteur C par rapport au premier connecteur C, sur la même colonne de la matrice 401 que le premier connecteur C, s'il existe.

On obtient ainsi une organisation matricielle des connecteurs C.

Chaque connecteur C de la première ligne 402 de la matrice 401 est connecté à un port 42, 43, 44 de flux via son interface Nord.

Chaque connecteur C de la dernière colonne 404 de la matrice 401 est connectée à une mémoire 46, 47, 48, 49 via son interface Est.

Les connecteurs C de la première colonne 403 ne disposent pas d'interface Ouest, ou leur interface Ouest n'est pas connectée. Les connecteurs C de la dernière ligne 407 de la matrice 401 ne disposent pas d'interface Sud, ou leur interface Sud n'est pas connectée. Toute tentative d'accès à des interfaces Sud ou Ouest de connecteurs C non connectées ou inexistantes peut servir à détecter une erreur d'utilisation de la structure 40. Une erreur d'utilisation de la structure 40 peut intervenir par exemple : lorsqu'il ne reste plus de place dans une mémoire pour la sauvegarde, lorsque les données ne sont pas trouvées. Une erreur d'utilisation ainsi détectée peut être communiquée à un processeur utilisant la structure 40, l'informant ainsi d'un nombre trop important de données chargées par rapport à la taille de la structure 40 par exemple.

On peut distinguer dans la structure 40 ainsi composée, deux types de flux d'informations : les flux de sauvegarde et les flux de restitution de données, ainsi que deux états des flux d'informations à l'intérieur des connecteurs C : connectés et non connectés. Les flux de sauvegarde et de restitution comportent l'ensemble des données, des signaux de commande d'écriture ou de lecture, des signaux de contrôle d'opération mémoire, des états de mémoire.

La figure 5 représente de manière schématique un connecteur 50 dans un état nommé flux non connecté. Lorsque le connecteur est dans l'état flux non connecté, les données de flux 51, 53 provenant d'un port de flux 42, 43, 44, ou d'un autre connecteur ainsi que les signaux de commande de lecture ou d'écriture 52, 57 sont interconnectées à l'intérieur du connecteur 50 entre l'interface Nord et l'interface Sud du connecteur 50. De la même manière, les données de flux 58, 59, les états de la mémoire 57, 60, et les opérations mémoire 56, 59 sont interconnectés à l'intérieur du connecteur 50 entre l'interface Est et l'interface Ouest du connecteur 50. Le connecteur 50, lorsqu'il est à l'état flux non connecté, laisse donc passer toutes les informations qu'il reçoit vers un connecteur adjacent s'il existe. Un connecteur 50 dans un état flux non connecté propage donc les informations qu'il reçoit.

La figure 6 représente de manière schématique un connecteur 50 dans un état nommé flux de sauvegarde connecté. Lorsque le connecteur 50 est à l'état flux de sauvegarde connecté, les données de flux 51 en provenance d'un port de flux 42, 43, 44, sont interconnectées à l'intérieur du connecteur 50 entre l'interface Nord et l'interface Est. Les données de flux entrant par la première entrée/sortie de données de flux 51 de l'interface Nord sont donc dirigées vers la troisième entrée/sortie de données de flux 55 de l'interface Est. Une réception d'un signal de commande d'écriture provenant d'un port de flux 42, 43, 44, sur l'entrée de commande 52 de l'interface Nord entraîne une sortie d'un signal de contrôle d'une opération mémoire 56 de l'interface Est. Le signal de contrôle d'une opération mémoire véhicule une information de type pousser, correspondant à une écriture dans une mémoire 46, 47, 48, 49 dans le cadre de la sauvegarde. Une opération de sauvegarde étant en cours, sur la ligne du connecteur 50, la quatrième sortie d'état mémoire 60 de l'interface Ouest véhicule un état mémoire de type non vide, ou invalide le signal vide, afin notamment d'éviter qu'un autre connecteur situé sur la même ligne que le connecteur 50 n'écrive des informations dans la mémoire 46, 47, 48, 49. En effet, l'état mémoire non vide est alors propagé vers les connecteurs C situés à l'ouest du connecteur C. L'état mémoire non vide sert également pour chaque connecteur C à savoir si la pile ou mémoire 46, 47, 48, 49 associée à la ligne du connecteur 50 contient des données. Dans les deux cas, un état mémoire non vide signifie que la pile ou mémoire 46, 47, 48, 49 n'est pas disponible pour sauvegarder des données d'un flux. La génération d'un état mémoire non vide dans ce cas peut être faite soit par le connecteur 50 lui-même, soit par la pile 46, 47, 48, 49, associée à la ligne du connecteur 50.

Dans ce cas, les entrées de données de flux 55 de l'interface Est et les sorties de données de flux 58 de l'interface Ouest ne sont pas connectées à l'intérieur du connecteur 50. De la même manière, les entrées/sorties d'état de mémoire 60, 57 des interfaces Est et Ouest ne sont pas interconnectées à l'intérieur du connecteur 50.

Un connecteur 50 dans un état flux de sauvegarde connecté permet donc de router et de propager les flux de données.

La figure 7 représente de manière schématique un connecteur 50 dans un état flux de restitution connecté. Lorsque le connecteur 50 est à l'état flux de restitution connecté, les données de flux à destination des ports de flux 42, 43, 44 ainsi qu'un signal de commande de lecture provenant d'une mémoire 46, 47, 48, 49, située sur la ligne du connecteur 50, sont interconnectées entre l'interface Nord et l'interface Est du connecteur 50. En effet, les données de flux reçues sur la troisième entrée/sortie de données de flux 55 de l'interface Est sort du connecteur par la première entrée/sortie de données de flux 51 de l'interface Nord. De plus la réception d'un signal de commande de lecture sur l'entrée de commande 52 de l'interface Nord entraîne la génération d'un signal de contrôle d'opérations mémoire de type tirer sur la première sortie de signaux de contrôle 56 de l'interface Est.

Les troisième et quatrième entrées/sorties de données de flux 55, 58 des interface Est et Ouest sont non connectées à l'intérieur du connecteur 50.

Un signal d'état de mémoire contenant l'information mémoire pleine est propagé vers les connecteurs situés à l'ouest du connecteur 50 en partant de la deuxième sortie d'états 60 de l'interface Ouest. Cet état mémoire pleine peut provenir soit du connecteur 50 lui-même, soit de la mémoire 46, 47, 48, 49 située au bout de la ligne du connecteur 50 dans la matrice 401 de connecteur C.

Un connecteur 50 dans un état flux de restitution connecté permet de router et de propager les flux de données.

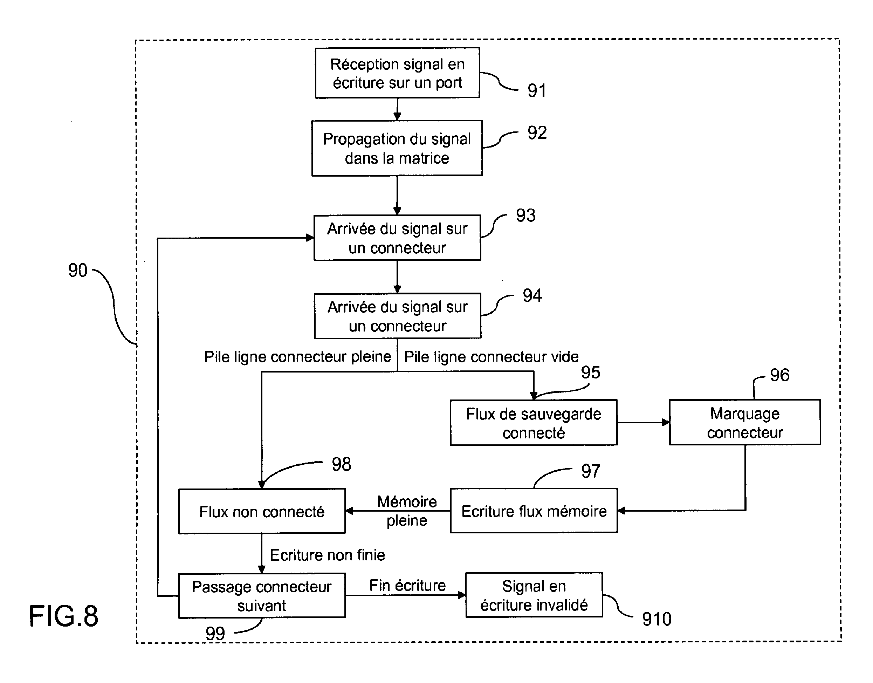

La figure 8 représente différentes étapes possibles de la partie sauvegarde 90 du procédé de sauvegarde et de restitution selon l'invention utilisant la structure de sauvegarde et de restitution 40 selon l'invention.

A un état initial de la matrice 401 de connecteurs C représentée sur la figure 3, tous les connecteurs C sont à l'état flux non connecté.

Une première étape 91 de la partie sauvegarde 90 selon l'invention est une étape de réception d'un signal de commande d'écriture sur un port de flux 42, 43, 44 de la structure 40. La première étape de réception 91 peut s'effectuer en activant un signal de commande d'écriture sur un port de flux 42, 43, 44. A l'activation du signal de commande de lecture sur un port de flux 42, 43, 44, les données de flux présentes sur le port de flux 42, 43, 44 peuvent être sauvegardées.

Le signal de commande de type écriture est alors propagé à partir du port de flux 42, 43, 44 à travers la matrice 401 de connecteurs C au cours d'une deuxième étape 92 du procédé de sauvegarde 90.

Un signal de type écriture arrive alors sur un connecteur C positionné sur la colonne du port de flux 42, 43, 44, nommé connecteur courant dans la suite, au cours d'une troisième étape 93 du procédé de sauvegarde 90.

Une vérification 94 de l'état de la pile de la ligne du connecteur courant est ensuite effectuée par l'intermédiaire du signal d'état mémoire. Cette vérification 94 fait partie d'une quatrième étape 94 de la partie sauvegarde 90.

Si la pile de la ligne du connecteur courant est vide, le connecteur courant passe à l'état flux de sauvegarde connecté au cours d'une cinquième étape 95. Ainsi les données de flux et une demande d'écriture sont transmis à la pile 46, 47, 48, 49 située sur la ligne du connecteur courant. La demande d'écriture est transmise par l'intermédiaire d'un signal de contrôle d'opération mémoire pousser par exemple.

Ensuite, au cours d'une sixième étape 96, le connecteur est marqué afin de pouvoir identifier les connecteurs C ayant servis à sauvegarder des données dans une pile 46, 47, 48, 49 dans la phase de restitution détaillée par la suite.

Une septième étape 97 est une étape d'écriture des données de flux en mémoire afin d'effectuer la sauvegarde de ces données.

Lorsque la pile 46, 47, 48, 49 est pleine, celle-ci envoie un signal d'état mémoire à pleine et le connecteur courant passe à l'état flux non connecté au cours d'une huitième étape 98.

Si l'écriture des données de flux n'est pas terminée, les données de flux et les signaux de contrôle sont propagés à un connecteur suivant le connecteur courant dans la colonne de la matrice 401. Le passage au connecteur suivant est une neuvième étape 99 du procédé de sauvegarde 90 permettant de rechercher une nouvelle pile disponible pour sauvegarder le reste des données de flux.

L'étape suivante est alors la troisième étape 93 d'arrivée du signal sur un connecteur : le connecteur suivant. Le connecteur suivant devient alors le connecteur courant dans les étapes suivant la troisième étape 93 : la quatrième étape 94, la cinquième étape 95, la sixième étape 96, la septième étape 97, la huitième étape 98 et ainsi de suite jusqu'à l'écriture complète des données de flux dans les mémoires 46, 47, 48, 49 de la structure 40 selon l'invention.

Lorsque l'écriture des données de flux est finie, au cours d'une dixième étape 910, le signal de commande en écriture est invalidé. Il ne se propage donc plus dans la matrice 401 de connecteurs C.

Après la quatrième étape 94, si la pile 46, 47, 48, 49 de la ligne du connecteur courant sur lequel le signal arrive est pleine, le connecteur courant passe à l'état flux non connecté au cours de la huitième étape 98 et ensuite, on passe au connecteur suivant dans la colonne du connecteur courant au cours de la neuvième étape 99 afin de continuer la partie sauvegarde 90 jusqu'à l'écriture complète des données de flux en mémoire.

Les données de flux ainsi sauvegardées restent stockées dans les piles de la structure 40 jusqu'à leur restitution.

Le passage d'une pile 46, 47, 48, 49 à une pile 46, 47, 48, 49 suivante pour sauvegarder l'ensemble des données de flux est provoqué par l'activation du signal plein par la pile 46, 47, 48, 49. Si plusieurs cycles sont nécessaires pour sauvegarder l'ensemble des données de flux et que le signal pleine est généré lorsque la limite de stockage est atteinte par une pile, d'autres données de flux éventuellement transmises sur le port pendant ce délai peuvent être perdues.

Le signal pleine est donc dans ce cas acheminé vers le connecteur C de la colonne de la matrice 401 le plus éloigné de la pile 46, 47, 48, 49 en tenant compte du délai d'écriture. A chaque écriture dans la pile, le signal pleine est donc transmis vers une nouvelle colonne, ainsi, chaque connecteur de la matrice 401 reçoit le signal pleine suffisamment en avance pour ne pas engendrer de perte de données. Le signal pleine est donc transmis aux connecteurs avant que la pile ne soit pleine, par exemple dès le début de l'écriture dans la pile des données de flux.

D'autres mécanismes peuvent être mis en oeuvre dans la gestion de la structure 40. Parmi ceux-ci, lorsqu'un connecteur essaie de sauvegarder des données de flux dans la pile 46, 47, 48, 49 correspondant à ce connecteur, celui-ci peut envoyer une requête à la pile afin de savoir s'il peut ou non l'utiliser afin d'effectuer la sauvegarde. Cette requête ainsi que la pile 46, 47, 48, 49 peut être transmise de connecteur à connecteur de la même ligne vers la pile 46, 47, 48, 49 par les interfaces Ouest et Est de chaque connecteur de la ligne. Si la requête passe par un connecteur ayant déjà effectué une requête, ce connecteur peut renvoyer à destination du connecteur requerrant un signal indiquant que la pile n'est pas disponible. A la réception du signal pile indisponible, le connecteur peut basculer en mode flux non connecté de façon à trouver une nouvelle pile 46, 47, 48, 49 de sauvegarde pour les données de flux. Cette mise en oeuvre permet d'éviter que deux demandes de sauvegarde utilisent en même temps la même pile, en effet ceci peut engendrer une perte de données.

Une gestion de demandes parallèles de sauvegarde de données peut également être mise en oeuvre en amont de la structure 40 : dans le processeur utilisant la structure 40 par exemple.

La figure 10 représente différentes étapes possibles de la partie restitution 100 du procédé de sauvegarde et de restitution selon l'invention utilisant la structure 40 selon l'invention.

Une restitution de données sauvegardées dans une pile 46, 47, 48, 49 de la structure 40 commence par une onzième étape 101 de réception d'un signal de lecture sur le port 42, 43, 44 de la structure 40 ayant servi à la sauvegarde des données de flux à restituer.

La réception d'un signal de lecture entraîne la propagation d'un signal de commande de lecture dans la matrice 401 de connecteurs C au cours d'une douzième étape 102. Le signal de commande se propage dans la matrice 401 de connecteurs suivant un axe défini par les interfaces Nord et Sud des connecteurs C.

Lorsque le signal de commande arrive sur un connecteur, appelé par la suite le connecteur courant, au cours d'une treizième étape 103, une vérification du marquage du connecteur courant est effectuée. En effet, si le connecteur courant à été utilisé pour sauvegarder les données de flux, il a été marqué au cours de la sixième étape 96 du procédé de sauvegarde. Le premier connecteur marqué rencontré est, de par la structure matricielle de la structure 40, le premier connecteur utilisé au cours de la sauvegarde.

Si le connecteur courant est marqué, une quatorzième étape 104 est une étape de passage du connecteur à l'état flux de restitution connecté. Ensuite un signal de contrôle tirer est transmis à la pile 46, 47, 48, 49 située sur la ligne du connecteur courant afin qu'elle restitue les données qu'elle a enregistrées.

Une quinzième étape 105 est donc une étape de lecture des données de flux dans la mémoire. Les données restituées par la mémoire transitent ensuite par le connecteur courant jusqu'au port ayant transmis le signal de commande de lecture.

Une fois la pile vide, le marquage du connecteur est annulé au cours d'une seizième étape 106 et le connecteur courant passe à l'état flux non connecté.

Au cours d'une dix-septième étape 107, on passe au connecteur suivant le connecteur courant dans la colonne, pour poursuivre éventuellement la lecture des données de flux. Le connecteur suivant devient le connecteur courant pour reprendre les différentes étapes de la partie restitution 100 à partir de la treizième étape 103.

Si le connecteur courant n'est pas marqué, on passe directement à la dix-septième étape 107, c'est à dire au connecteur suivant. Dans ce cas, la demande de restitution est transmise aux connecteurs des lignes suivantes jusqu'à trouver le connecteur ayant servi à sauvegarder le flux.

La restitution des données de flux sauvegardées sur plusieurs piles 46, 47, 48, 49 différentes peut générer des latences au moment du changement de pile. Les latences engendrent des trous dans les flux restitués. Les latences peuvent être gérées de différentes façons.

Une première méthode de gestion des latences peut être un ajout d'une information de données valides sur les données de flux venant des différentes piles, afin qu'un composant externe, récupérant les données de flux, puisse gérer les latences.

Une deuxième méthode pouvant être mise en oeuvre utilise le signal de commande de lecture : il est en effet possible de faire passer le signal de commande de lecture entre les connecteurs consécutifs d'une même colonne de façon à rechercher toutes les piles ayant servi à sauvegarder les données de flux. Le passage du signal de commande de lecture dans un connecteur peut être réalisé en interconnectant l'entrée de commande 52 de l'interface Nord avec la sortie de commande 54 de l'interface Sud du connecteur. Chaque pile ayant sauvegardé une portion des données de flux commence alors à transmettre la portion de données de flux qu'elles ont enregistrée. La lecture des données de flux par chaque mémoire ainsi que la transmission de ces données s'effectue donc de manière parallèle. La remontée des portions de données de flux à travers les connecteurs jusqu'au port s'arrête alors à tout connecteur dans l'état flux de restitution connecté afin d'éviter tout écrasement de données. Ainsi, lors du basculement du connecteur bloquant à l'état flux non connecté, la portion suivante du flux est directement disponible. Ceci permet donc de supprimer les latences lors du changement de pile ayant lieu durant la restitution d'un flux.

La structure 40 selon l'invention permet de sauvegarder ou restituer des flux de données entre des tâches productrices et des tâches consommatrices de données dans des systèmes électroniques.

Avantageusement la structure 40 et le procédé de sauvegarde et de restitution 90, 100 selon l'invention permet de gérer des flux de données dont les tailles peuvent varier en fonction des tâches productrices et consommatrices et permet de supporter la gestion de plusieurs flux en parallèle.

De plus, les flux peuvent être gérés de manière totalement indépendante et à moindre coût. En effet la taille mémoire est mutualisée pour tous les flux de données et le procédé selon l'invention empêche la création de ressources partagées : une pile sert au stockage d'une seule donnée de flux.

Un autre avantage de l'invention est que la gestion de l'espace mémoire est automatique. En effet, un utilisateur de la structure 40 selon l'invention n'a pas à fournir d'informations sur l'emplacement des données dans l'espace de mémorisation de la structure 40. Il suffit à l'utilisateur de connecter un flux sur un port de la structure 40 selon l'invention et de contrôler l'opération désirée, sauvegarde ou restitution.

L'invention permet de résoudre à moindre coût de mise en oeuvre la gestion de sauvegarde de flux variables en taille, en fréquence et en durée, ne nécessitant pas de réorganisation. La présente invention permet notamment une mise en oeuvre de traitements sur des plate-formes à reconfiguration dynamique.

## Revendications

1. Structure de sauvegarde et de restitution (40) d'un flux de données comportant une matrice (401) de connecteurs C répartis en ligne (402, 405) et en colonne (403, 404) sur ladite matrice (401) :
• chaque connecteur C d'une même ligne (402, 405) étant relié à ses deux connecteurs voisins sur la ligne (402, 405) s'ils existent ;
• chaque connecteur C d'une même colonne (403, 404) étant relié à ses deux connecteurs voisins C sur la colonne (403, 404) s'ils existent ;
ladite structure étant **caractérisée en ce que** :
• chaque ligne (402, 405) de connecteurs C est connectée à une mémoire (46, 47, 48, 49) ayant un fonctionnement de type premier entré, premier sorti, ladite mémoire (46, 47, 48, 49) fournissant des informations sur son état aux connecteurs C de la ligne (402, 405), par l'intermédiaire d'un connecteur C, situé à une extrémité de la ligne (402, 405) ;
• chaque colonne (403, 404) de connecteurs C est connectée à un port d'entrée et de sortie (42, 43, 44) d'un flux de données de la structure (40) par l'intermédiaire d'un connecteur C situé à une extrémité de la colonne (403, 404) ;
chaque connecteur C étant apte à router et propager de manière autonome un flux de données entrant ou sortant de la structure (40), en fonction des états fournis par les mémoires (46, 47, 48, 49).

2. Structure (40) selon la revendication 1, **caractérisée en ce qu'**une sauvegarde d'un flux de données s'effectue d'un port d'entrée et de sortie (42, 43, 44) vers une ou plusieurs mémoires (46, 47, 48, 49), le flux de données passant par des connecteurs C de la matrice (401).

3. Structure (40) selon l'une quelconque des revendications 1 et 2, **caractérisée en ce qu'**une restitution d'un flux de données s'effectue des mémoires (46, 47, 48, 49) vers un port d'entrée et de sortie (42, 43, 44), le flux de données passant par des connecteurs C de la matrice (401).

4. Structure (40) selon l'une quelconque des revendications précédentes, **caractérisée en ce que** chaque connecteur C route ou propage un flux de données selon :
■ un état de la mémoire (46, 47, 48, 49) connectée sur la ligne (402, 405) du connecteur C ;
■ un type d'opération mémoire : lecture, écriture.

5. Structure (40) selon l'une quelconque des revendications précédentes, **caractérisé en ce que** chaque connecteur C comporte au moins quatre interfaces :
■ une première interface Nord comportant :
o une première entrée et, ou sortie de données de flux (51) ;
o une entrée (52) d'un signal de commande de lecture ou d'écriture ;
■ une deuxième interface Sud comportant :
o une deuxième entrée et, ou sortie de données de flux (53) ;
o une sortie (54) d'un signal de commande de lecture ou d'écriture ;
■ une troisième interface Est comportant :
o une troisième entrée et, ou sortie de données de flux (55) ;
o une sortie d'une opération mémoire (56) de lecture ou d'écriture ;
o une entrée d'un état de la mémoire (57) ;
■ une quatrième interface Ouest comportant :
o une quatrième entrée et, ou sortie de données de flux (58) ;
o une entrée d'une opération mémoire (59) de lecture ou d'écriture ;
o une sortie d'un état de la mémoire (60).

6. Structure (40) selon l'une quelconque des revendications précédentes, **caractérisée en ce que** :
■ la première interface Nord d'un premier connecteur C situé à une extrémité de l'une des colonnes (403, 404) est connectée à un port d'entrée et, ou de sortie (42, 43, 44) de la structure (40) ;
■ la troisième interface Est d'un deuxième connecteur C situé à une extrémité de l'une des lignes (402, 405) est connectée à une mémoire (46, 47, 48, 49) de la structure (40) ;
■ les premières et deuxième interfaces Nord, Sud de connecteurs C consécutifs sur une même colonne (403, 404), sont connectées entre elles ;
■ les troisième et quatrième interfaces Est, Ouest de connecteurs C consécutifs sur une même ligne (402, 405), sont connectées entre elles.

7. Structure selon l'une quelconques des revendications 5 et 6, **caractérisée en ce qu'**une mémoire (46, 47, 48, 49) a trois états : vide, pleine et non vide.

8. Procédé de sauvegarde (90) et de restitution (100) d'un flux de données, **caractérisé en ce que** :
o ledit procédé utilise la structure de sauvegarde et de restitution (40) décrite dans les revendications 1 à 7 ;
o la sauvegarde (90) d'un flux de données comporte au moins les étapes suivantes :
■ réception (91) d'un signal de commande d'écriture et des données de flux à sauvegarder sur un premier port de la structure ;
■ propagation (92) du signal de commande d'écriture et des données de flux dans la matrice ;
■ arrivée (94) du signal de commande d'écriture et des données dans un connecteur courant;
- si la mémoire de la ligne du connecteur courant est vide :
■ envoi (95) par le connecteur courant d'un signal de contrôle d'écriture à la mémoire de la ligne du connecteur courant et marquage (96) du connecteur courant ;
■ écriture (97) des données de flux dans la mémoire de la ligne du connecteur courant ;
- si la mémoire de la ligne du connecteur courant est non-vide :
■ passage (99) des données de flux restant à sauvegarder au connecteur suivant dans la colonne du connecteur courant et reprise de la sauvegarde à l'étape d'arrivée du signal de commande d'écriture dans un connecteur courant, le connecteur suivant remplaçant le connecteur courant ;
o la restitution (100) d'un flux de données comporte au moins les étapes suivantes :
■ réception (101) d'un signal de commande de lecture d'un flux de données sur le premier port (42, 43, 44) de la structure (40) ;
■ propagation (102) du signal de commande de lecture dans la matrice (401) ;
■ arrivée (103) du signal de commande de lecture dans un connecteur courant ;
- si le connecteur C courant est marqué :
■ envoi (104) par le connecteur courant d'un signal de contrôle de lecture à la mémoire de la ligne du connecteur courant ;
■ lecture (105) des données de flux sauvegardées dans la mémoire de la ligne du connecteur courant et propagation des données de flux lues dans la matrice jusqu'au premier port ;
■ annulation du marquage (106) du connecteur courant;
■ passage (107) du signal de commande de lecture au connecteur suivant dans la colonne du connecteur courant et reprise du procédé à l'étape d'arrivée du signal de lecture dans un connecteur courant, le connecteur suivant devenant le connecteur courant ;
- si le connecteur C est non marqué :
■ passage (107) du signal de commande de lecture au connecteur suivant dans la colonne du connecteur et reprise du procédé à l'étape d'arrivée du signal de lecture dans un connecteur, le connecteur suivant devenant le connecteur courant.

9. Procédé selon l'une quelconque la revendication 8, **caractérisé en ce qu'**au cours de la sauvegarde (90) un état de disponibilité de la mémoire de la ligne du connecteur courant est diffusé au connecteur courant à sa demande.

10. Procédé selon l'une quelconque des revendications 8 à 10, **caractérisé en ce que** les lectures (105) des données d'un même flux sauvegardées dans des mémoires (46, 47, 48, 49) différentes sont effectuées de manière parallèle.

## Claims

1. A structure (40) for backup and recovery of a data flow including a matrix (401) of C connectors distributed in rows (402, 405) and columns (403, 404) over said matrix (401):
■ each C connector of the same row (402, 405) being linked to the two neighboring connectors thereof in the row (402, 405), if any;
• each C connector of the same column (403, 404) being linked to the two neighboring C connectors thereof in the column (403, 404), if any;
said structure being **characterized in that**:
• each row (402, 405) of C connectors is connected to a memory (46, 47, 48, 49) with first in, first out operation, said memory (46, 47, 48, 49) providing information on the status thereof to the C connectors of the row (402, 405), via a C connector situated at one end of the row (402, 405);
• each column (403, 404) of C connectors is connected to an input and output port (42, 43, 44) of a data flow from the structure (40) via a C connector situated at one end of the column (403, 404);
each C connector being adapted for independently routing and propagating a data flow coming in or going out of the structure (40), depending on statuses provided by the memories (46, 47, 48, 49).

2. The structure (40) according to claim 1, **characterized in that** a backup of a data flow is performed from an input and output port (42, 43, 44) to one or more memories (46, 47, 48, 49), with the data flow going through C connectors of the matrix (401).

3. The structure (40) according to any of claims 1 and 2, **characterized in that** a recovery of a data flow is performed from the memories (46, 47, 48, 49) to an input and output port (42, 43, 44), with the data flow going through C connectors of the matrix (401).

4. The structure (40) according to any of the preceding claims, **characterized in that** each C connector routes or propagates a data flow according to:
■ a status of the memory (46, 47, 48, 49) connected in the row (402, 405) of the C connector;
■ a memory operation type: read, write.

5. The structure (40) according to any of the preceding claims, **characterized in that** each C connector comprises at least four interfaces:
■ a first North interface including:
o a first flow data (51) input and/or output;
o an input (52) of a read or write control signal;
■ a second South interface including:
o a second flow data (53) input and/or output;
o an output (54) of a read or write control signal;
■ a third East interface including:
o a third flow data (55) input and/or output;
o an output of a read or write memory operation (56);
o an input of a status of the memory (57);
■ a fourth West interface including:
o a fourth flow data (58) input and/or output;
o an input of a read or write memory operation (59);
o an output of a status of the memory (60).

6. The structure (40) according to any of the preceding claims, **characterized in that**:
■ the first North interface of a first C connector situated at one end of one of columns (403, 404) is connected to an input and/or output port (42, 43, 44) of the structure (40);
■ the third East interface of a second C connector situated at one end of one of the rows (402, 405) is connected to a memory (46, 47, 48, 49) of the structure (40);
■ the first and second North, South interfaces of consecutive C connectors in the same column (403, 404) are connected to each other,
■ the third and fourth East, West interfaces of consecutive C connectors in the same row (402, 405) are connected to each other.

7. The structure according to any of claims 5 and 6, **characterized in that** a memory (46, 47, 48, 49) has three statuses: empty, full, and non-empty.

8. A method for backup (90) and recovery (100) of a data flow, **characterized in that**:
o said method uses the backup and recovery structure (40) described in claims 1 to 7;
o the backup (90) of a data flow comprises at least the following steps:
■ receiving (91) a write control signal and flow data to back up at a first port of the structure;
■ propagating (92) the write control signal and the flow data into the matrix;
■ arriving (94) of the write control signal and the data at a current connector;
- if the memory of the row of the current connector is empty:
■ sending (95) via the current connector a write control signal to the memory of the row of the current connector and tagging (96) the current connector;
■ writing (97) the flow data into the memory of the row of the current connector;
- if the memory of the row of the current connector is non-empty:
■ passing (99) of the remaining flow data to backup to the next connector in the column of the current connector and resuming the backup at the arrival step of the write control signal at a current connector, the next connector replacing the current connector;
o the recovery (100) of a data flow comprises at least the following steps:
■ receiving (101) a read control signal of a data flow at the first port (42, 43, 44) of the structure (40);
■ propagating (102) the read control signal into the matrix (401);
■ arriving (103) of the read control signal at a current connector;
- if the current C connector is tagged:
■ sending (104) via the current connector a read control signal to the memory of the row of the current connector;
■ reading (105) the flow data backed up in the memory of the row of the current connector and propagating the flow data read into the matrix up to the first port;
■ canceling the tag (106) of the current connector;
■ passing (107) of the read control signal to the next connector in the column of the current connector and resuming the method at the arrival step of the read signal at a current connector, the next connector becoming the current connector;
- if the C connector is not tagged:
■ passing (107) of the read control signal to the next connector in the column of the connector and resuming the method at the arrival step of the read signal at a connector, the next connector becoming the current connector.

9. The method according to claim 8, **characterized in that** during backup (90) an availability status of the memory of the row of the current connector is broadcasted to the current connector upon request of the latter.

10. The method according to any of claims 8 to 9, **characterized in that** reading (105) of the data of the same flow, backed up in different memories (46, 47, 48, 49), is done in parallel.

## Patentansprüche

1. Struktur für Speicherung und Abruf (40) eines Datenflusses, die eine Matrix (401) von Verbindern C aufweist, die zeilen- (402, 405) und spaltenförmig (403, 404) auf der Matrix (401) verteilt sind:
• wobei jeder Verbinder C derselben Zeile (402, 405) mit seinen zwei benachbarten Verbindern auf der Zeile (402, 405) verbunden ist, wenn diese vorhanden sind,
• wobei jeder Verbinder C derselben Spalte (403, 404) mit seinen zwei benachbarten Verbindern C auf der Spalte (403, 404) verbunden ist, wenn diese vorhanden sind,
wobei die Struktur **dadurch gekennzeichnet ist, dass**:
• jede Zeile (402, 405) von Verbindern C mit einem Speicher (46, 47, 48, 49) mit einer Funktion vom Typ First-in-First-out gekoppelt ist, wobei der Speicher (46, 47, 48, 49) den Verbindern C der Zeile (402, 405) über einen Verbinder C, der sich an einem Ende der Zeile (402, 405) befindet, Informationen über seinen Zustand liefert,
• jede Spalte (403, 404) von Verbindern C über einen Verbinder C, der sich an einem Ende der Spalte (403, 404) befindet, mit einem Eingangs- und Ausgangsport (42, 43, 44) eines Datenflusses der Struktur (40) gekoppelt ist,
wobei jeder Verbinder C imstande ist, einen in die Struktur (40) eintretenden oder aus ihr austretenden Datenfluss in Abhängigkeit von den von den Speichern (46, 47, 48, 49) gelieferten Zuständen selbständig zu routen und zu verbreiten.

2. Struktur (40) nach Anspruch 1, **dadurch gekennzeichnet, dass** eine Speicherung eines Datenflusses von einem Eingangs- und Ausgangsport (42, 43, 44) in Richtung eines oder mehrerer Speicher (46, 47, 48, 49) erfolgt, wobei der Datenfluss durch Verbinder C der Matrix (401) fließt.

3. Struktur (40) nach einem der Ansprüche 1 und 2, **dadurch gekennzeichnet, dass** ein Abruf eines Datenflusses aus den Speichern (46, 47, 48, 49) in Richtung eines Eingangs- und Ausgangsports (42, 43, 44) erfolgt, wobei der Datenfluss durch Verbinder C der Matrix (401) fließt.

4. Struktur (40) nach einem der vorangehenden Ansprüche, **dadurch gekennzeichnet, dass** jeder Verbinder C einen Datenfluss routet oder verbreitet gemäß:
■ einem Zustand des auf der Zeile (402, 405) des Verbinders C gekoppelten Speichers (46, 47, 48, 49),
■ einem Speicherbetriebstyp: Lesen, Schreiben.

5. Struktur (40) nach einem der vorangehenden Ansprüche, **dadurch gekennzeichnet, dass** jeder Verbinder C mindestens vier Schnittstellen aufweist:
■ eine erste Nord-Schnittstelle, die aufweist:
o einen ersten Eingang und, oder Ausgang von Flussdaten (51),
o einen Eingang (52) eines Steuersignals des Lesens oder Schreibens,
■ eine zweite Süd-Schnittstelle, die aufweist:
o einen zweiten Eingang und, oder Ausgang von Flussdaten (53),
o einen Ausgang (54) eines Steuersignals des Lesens oder Schreibens,
■ eine dritte Ost-Schnittstelle, die aufweist:
o einen dritten Eingang und, oder Ausgang von Flussdaten (55),
o einen Ausgang eines Speichervorgangs (56) des Lesens oder Schreibens,
o einen Eingang eines Speicherzustands (57),
■ eine vierte West-Schnittstelle, die aufweist:
o einen vierten Eingang und, oder Ausgang von Flussdaten (58),
o einen Eingang eines Speichervorgangs (59) des Lesens oder Schreibens,
o einen Ausgang eines Speicherzustands (60).

6. Struktur (40) nach einem der vorangehenden Ansprüche, **dadurch gekennzeichnet, dass**:
■ die erste Nord-Schnittstelle eines ersten Verbinders C, der sich an einem Ende einer der Spalten (403, 404) befindet, mit einem Eingangs- und, oder Ausgangsport (42, 43, 44) der Struktur (40) gekoppelt ist,
■ die dritte Ost-Schnittstelle eines zweiten Verbinders C, der sich an einem Ende einer der Zeilen (402, 405) befindet, mit einem Speicher (46, 47, 48, 49) der Struktur (40) gekoppelt ist,
■ die erste und zweite Nord, Süd-Schnittstellen von auf derselben Spalte (403, 404) aufeinanderfolgenden Verbindern C untereinander gekoppelt sind,
■ die dritte und vierte Ost, West-Schnittstellen von auf derselben Zeile (402, 405) aufeinanderfolgenden Verbindern C untereinander gekoppelt sind.

7. Struktur nach einem der Ansprüche 5 und 6, **dadurch gekennzeichnet, dass** ein Speicher (46, 47, 48, 49) drei Zustände hat: leer, voll und nicht leer.

8. Verfahren für Speicherung (90) und Abruf (100) eines Datenflusses, **dadurch gekennzeichnet, dass**:
o das Verfahren die in den Ansprüchen 1 bis 7 beschriebene Speicherungs- und Abrufstruktur (40) verwendet,
o die Speicherung (90) eines Datenflusses mindestens die folgenden Schritte aufweist:
■ Empfang (91) eines Steuersignals des Schreibens und der zu speichernden Flussdaten auf einem ersten Port der Struktur,
■ Verbreitung (92) des Steuersignals des Schreibens und der Flussdaten in der Matrix,
■ Ankunft (94) eines Steuersignals des Schreibens und der Daten in einem regulären Verbinder,
- wenn der Speicher der Zeile des regulären Verbinders leer ist:
■ Versand (95) durch den regulären Verbinder eines Kontrollsignals des Schreibens an den Speicher der Zeile des regulären Verbinders und Markierung (96) des regulären Verbinders,
■ Schreiben (97) der Flussdaten in den Speicher der Zeile des regulären Verbinders,
- wenn der Speicher der Zeile des regulären Verbinders nicht leer ist:
■ Transfer (99) der restlichen zu speichernden Flussdaten an den in der Spalte des regulären Verbinders folgenden Verbinder und Wiederaufnahme der Speicherung beim Schritt der Ankunft des Steuersignals des Schreibens in einem regulären Verbinder, wobei der nächste Verbinder den regulären Verbinder ersetzt,
o der Abruf (100) eines Datenflusses mindestens die folgenden Schritte aufweist:
■ Empfang (101) eines Steuersignals des Lesens eines Datenflusses auf dem ersten Port (42, 43, 44) der Struktur (40),
■ Verbreitung (102) des Steuersignals des Lesens in der Matrix (401),
■ Ankunft (103) des Steuersignals des Lesens in einem regulären Verbinder,
- wenn der Verbinder C markiert ist:
■ Versand (104) durch den regulären Verbinder eines Kontrollsignals des Lesens an den Speicher der Zeile des regulären Verbinders,
■ Lesen (105) der in dem Speicher der Zeile des regulären Verbinders gespeicherten Flussdaten und Verbreitung der gelesenen Flussdaten in der Matrix bis zum ersten Port,
■ Annullierung der Markierung (106) des regulären Verbinders,
■ Transfer (107) des Steuersignals des Lesens an den in der Spalte des regulären Verbinders folgenden Verbinder und Wiederaufnahme des Verfahrens beim Schritt der Ankunft des Lesesignals in einem regulären Verbinder, wobei der nächste Verbinder der reguläre Verbinder wird,
- wenn der Verbinder C nicht markiert ist:
■ Transfer (107) des Steuersignals des Lesens an den in der Spalte des Verbinders folgenden Verbinder und Wiederaufnahme des Verfahrens beim Schritt der Ankunft des Lesesignals in einem Verbinder, wobei der nächste Verbinder der reguläre Verbinder wird.

9. Verfahren nach Anspruch 8, **dadurch gekennzeichnet, dass** während der Speicherung (90) ein Zustand der Verfügbarkeit des Speichers der Zeile des regulären Verbinders an den regulären Verbinder auf seine Anforderung hin ausgegeben wird.

10. Verfahren nach einem der Ansprüche 8 bis 10, **dadurch gekennzeichnet, dass** das Lesen (105) der in verschiedenen Speichern (46, 47, 48, 49) gespeicherten Daten desselben Flusses parallel erfolgt.
